# EUROPEAN PATENT APPLICATION

(11) **EP 1 624 694 A1**
(43) Date of publication of application: **08.02.2006**
(21) Application number: 05106890.6
(22) Date of filing: 27.07.2005
(51) Int. Cl.: H04N 7/24

(54) **Broadcast Metadata format independent of transmission standard.**

(30) Priority: 28.07.2004 US 900925
(71) Applicant: MICROSOFT CORPORATION, Redmond, Washington 98052-6399 (US)
(72) Inventor: Shield, Alan E., 98052, Redmond (US); Silverberg, Eric J., 98052, Redmond (US); Curtis, Glenn A., 98052, Redmond (US); Pickett, Shawn E., 98052, Redmond (US); Pritchett, Thaddeus C., 98052, Redmond (US)
(74) Representative: Zimmer, Franz-Josef

(57) **Abstract**

A multi-standard receiving device processes broadcast transmission signals that use multiple differing transmission standards. Processing entails conversion of the transmission standard's protocol standard into a normalized transport agnostic representation in order to allow consistent manipulation of a broadcast transmission signal's contents regardless of the transmission standard.

## Description

### TECHNICAL FIELD

This invention relates to multi-transport receiving devices that receive broadcast transmission signals using different transmission standards and converts metadata included in the broadcast transmission signals into formatted electronic program guide entries.

### BACKGROUND

Broadcast transmission signals include audio data, video data, and metadata which may be in-band or out-band data. Metadata describes audio and video content provided in the audio and video data, and may also provide additional information. Additional metadata information may include information as to when a program is broadcasted; where a viewer may tune to the program broadcast (i.e., tuner frequency or channel); which content provider (e.g., broadcaster, television network) the program originates from; and a description of the program.

Broadcast transmission signals make use of one of various transmission standards. A transmission standard defines how a broadcast transmission signal is broadcasted and further defines how a broadcast transmission signal is processed by a receiving device, including for example how a broadcast transmission signal is separated into audio, video, and metadata, and how the data is used. Furthermore, a transmission standard may define how information is extracted and used from metadata in the broadcast transmission signal.

Existing transmission standards continue to evolve, while new transmission standards are adopted. Using television as an example, particular transmission standards include ATSC (Advanced Television Systems Committee); NTSC (National Television Standards Committee); PAL (Phase Alternation Line); SECAM (Sequentiel Couleur Avec Memoire, or Sequential Color with Memory); and DVB (Digital Video Broadcasting). Certain transmission standards may be based on other transmission standards - for example SECAM is based on PAL. Transmission standards may also define specific rules or information pertaining to specific transmission mediums (satellite, terrestrial, and cable). An example of this is DVB-T for terrestrial (i.e., radio frequency or RF antenna) transmission, DVB-C for cable transmission, and DVB-S for satellite transmission.

Transmission standards are typically implemented and specific to particular regions of the world - for example, PAL and DVB are widely used in Europe, while NTSC is used in the United States. In certain situations, a particular transmission standard in applicable to a particular transmission medium - for example, a receiving device may only receive DVB-S broadcast transmission signals, and does not need to implement DVB-T or DVB-C.

Transmission standards define how metadata is carried over a broadcast transmission signal, such as the format of the metadata. In other words metadata payload is defined by protocols of the particular transmission standards.

In general, the different transmission standards (e.g., ATCS, DVB, NTSC) are not compatible with one another, and particular receiving devices such as television tuners and personal computers are configured to use a certain transmission standard. Therefore, if a transmission standard specific receiving device is used in an environment (i.e., different region of the world) that broadcasts broadcast transmission signals using a different transmission standard, the receiving device is unable to process the data in the broadcast transmission signal.

### SUMMARY

A multi-standard receiving device receives various broadcast transmission signals using different transmission standards. Metadata is separated and data is extracted from the metadata to form entries used in an electronic program guide (EPG) that are based on a predefined format.

### BRIEF DESCRIPTION OF THE CONTENTS

The detailed description is described with reference to the accompanying figures. In the figures, the left-most digit(s) of a reference number identifies the figure in which the reference number first appears. The use of the same reference numbers in different figures indicates similar or identical items.

Fig. 1 illustrates a system with a multi-standard receiving device capable of receiving and processing multiple television transmissions using different transmission standards.

Fig. 2 is a block diagram of the multi-standard receiving device.

Fig. 3 is a block diagram of transport specific recorder.

Fig. 4 is an illustration of electronic program guide (EPG) user interface that includes entries processed from multiple television transmissions using different transmission standards.

Fig. 5 is a flow diagram showing a process for creating data entries from multiple broadcast transmission signals using different transmission standards.

### DETAILED DESCRIPTION

The following disclosure describes a multi-standard receiving device capable of receiving multiple broadcast transmission signals from various broadcasters, where the multiple transports streams implement different transmission standards. The received broadcast transmission signals are processed such that metadata is processed as to a particular transmission standard used by a particular broadcast transmission signal. Metadata entries are created to and are part of an interactive electronic program guide (EPG) user interface (UI) representing information contained in the received metadata. The EPG is displayed to a user.

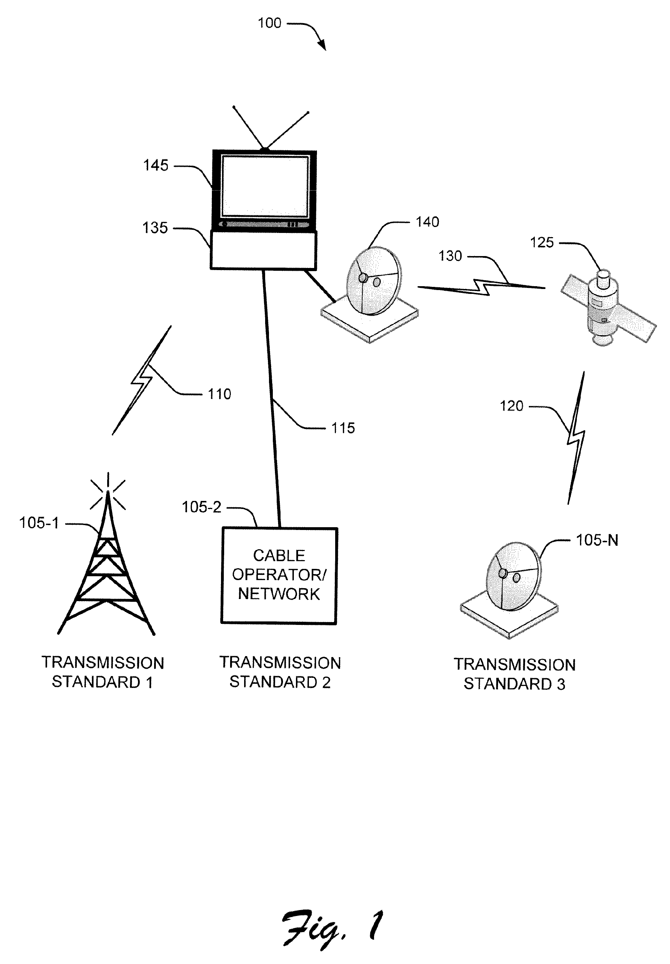

Fig. 1 shows an exemplary transmission system 100. System 100 includes multiple content providers or broadcasters 105-1, 105-2, and 105-3. The description uses by as an example television transmission, broadcast transmission signals, and transmission standards; however, it is contemplated that other forms of transmission may be used such as data, radio, and non-television media transmissions.

In this example, each of broadcasters 105 transmits using a different transmission standard 1, transmission standard 2, and transmission standard 3. Examples of such transmission standards include ATSC, NTSC, SECAM, DVB, and ISDB (Integrated Services Digital Broadcasting). Broadcast transmission signals may be sent as RF (radio frequency) transmissions, satellite, digital or cable transmissions, or other forms of communication transmissions.

Broadcaster 105-1 is a terrestrial broadcaster that transmits an RF signal 110. Broadcaster 105-2 is a cable operator or cable network broadcaster that provides a cable signal 115. Broadcaster 105-N is a satellite broadcaster that transmits a satellite uplink signal 120 received by a satellite 125. Satellite 125 transmits a downlink signal 130.

A multi-standard receiving device 135 receives signals 110, 115 and 130. In this example multi-standard receiving device 135 is connected to a satellite receiving dish 140 that receives downlink signal 130 which is passed on to multi-standard receiving device 135.

Whereas prior receiving devices are typically configured to receive and process broadcast transmission signals based on a particular transmission standard, multi-standard receiving device 135 is configured to be able to receive and process multiple broadcast transmission signals based on different transmission standards. In particular, multi-standard receiving device 145 is able to extract information from metadata of received broadcast transmission signals and create an electronic program guide (EPG) entry from the extracted information. Each EPG entry is defined by a predetermined format.

Multi-standard receiving device 135 may be a television "tuner", a television set top box, a cable television box, a digital video recorder, a personal computer (PC), or any device capable of receiving a broadcast transmission signal.

In this implementation, multi-standard receiving device 135 is connected to a display device 145 which may be a television monitor or computer monitor. In other implementations, multi-standard receiving device 135 and display device 145 may be an integrated unit. Display device 145 is particularly used to display video content and an electronic program guide (EPG) user interface to a user, where the EPG user interface includes EPG entries representing information extracted from metadata received as part of different television transmissions by multi-standard receiving device 135.

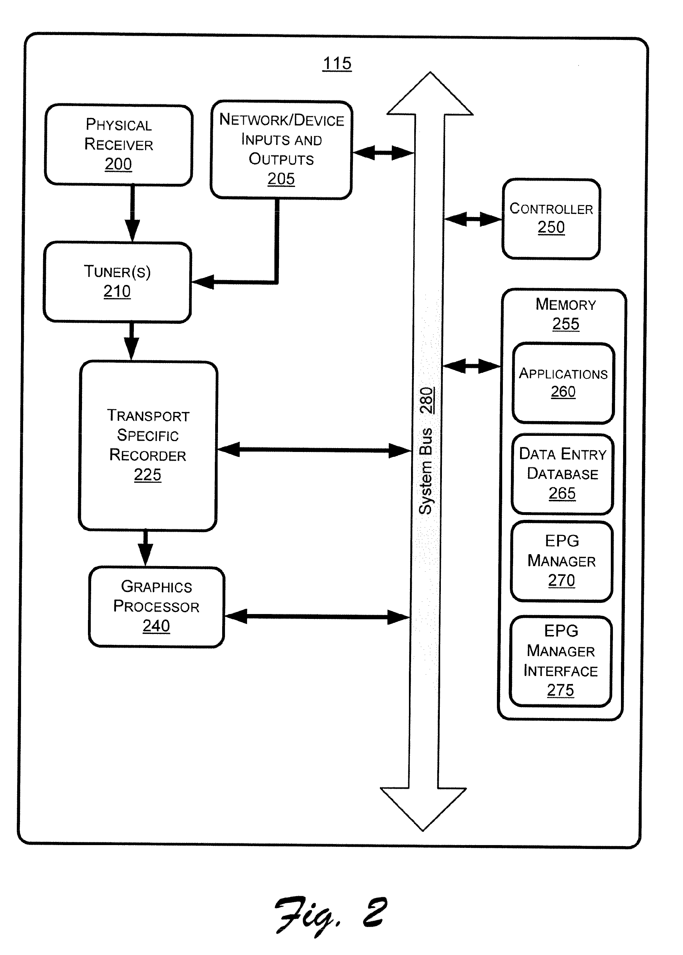

Fig. 2 shows exemplary multi-standard receiving device 135 in greater detail. Multi-standard receiving device 135 includes a physical receiver 200 to receive broadcast transmission signals (i.e., signals 110, 115, and 120). Physical receiver 200 may be an RF antenna, a satellite dish (e.g. satellite dish 140), or other receiving device, to receive RF signals, satellite signals, microwave signals, or other types of communication/transmission signals.

Broadcast transmission signals from a network (e.g., cable network 105-2) are received by multi-standard receiving device 115 through network/device inputs and outputs (I/O) 205 which may include coaxial input/output, an Ethernet input/output, and/or other types of communication/data inputs and outputs.

Broadcast transmission signals received by physical receiver 200 and/or by way of I/O 205 are passed to one or more tuner(s) 210. Tuner(s) 210 includes a broadcast in-band tuner used to isolate a particular physical channel from a multiplex of channels. The transmission of the physical channel is converted to a base-band or single signal.

The base-band signal is sent to a transmission standard or transport specific recorder 225 which may be implemented as a filter graph and is further discussed below. Regardless of the transmission standard that is used in the broadcast transmission signal, it is expected that common data information exists such that data entries may be processed, created, or converted from different broadcast transmission signals that use different transmission standards. In other words, metadata information may include information describing the program, the broadcast source, and the time of the broadcast. Data entries may be grouped to form an EPG from which an EPG user interface is provided and displayed to a user. A predetermined format describes the data entries, where the format is transmission standard independent. For example, the predetermined format may provide for a program title, program description, broadcast source, broadcast tuning, and program time fields, and information related to the respective fields.

Video or formatted sequence of pictures from transport specific recorder 225 may be passed on to a graphics processor 240 that renders a video format. Among the different functions provided by the graphics processor 240 is a function that allows an EPG user interface that represents multiple entries that extract or derive information from metadata of different television transmissions.

Multi-standard receiving device 135 further includes a central processing unit or controller 250. In general, controller 250 is used to initiate the components of multi-standard receiving device 135; process applications and run programs that are resident at or received by multi-transport receiving device 135; and fetch data and instructions from a memory 255.

A function of controller 250 is to load a particular transport specific recorder 225 from multiple transport specific recorders stored in memory 255. In certain implementations, an instance of transport specific recorder225 may be created using, for example, a filter graph application stored in memory 255 and processed by controller 250.

Memory 255 includes random access memory (RAM); read only memory (ROM) such as flash and electrically erasable program ROM (EEPROM) memory; hard disk memory (i.e., storage devices); and transportable memory (e.g., read/write optical disc).

The memory 255 includes applications 260 which for certain implementations may include an EPG application. The EPG application operates on a data entry database 265 to generate an EPG user interface that is displayed to a user. In this implementation, database 265 is stored in memory 255. Data entries that are processed by transport specific recorders are stored in the database 265.

In this implementation, an EPG application is shown separate from other applications 260 in the form of an EPG manager 270. In addition to the general description of an EPG application discussed above, EPG manager 270 provides particular functionality directed to communicating with database 265 such as performing queries and browsing as instructed by other applications and/or by a user. EPG manager 270 may expose (connect with) an EPG Manager Interface 275 that allows a user to request particular EPG information such as particular listings and to provide instructions such as scrolling through information representing EPG entries as shown on the EPG user interface.

A system bus 280 allows the controller 250 and other components of multi-standard receiving device 135 to communicate with one another. System bus 280 further allows components to interface with I/O 205 to other devices external to multi-standard receiving device 135. The system bus 280 may be implemented as one or more of any of several types of bus structures, including a memory bus or memory controller, a peripheral bus, an accelerated graphics port, or a local bus using any of a variety of bus architectures. By way of example, such architectures include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

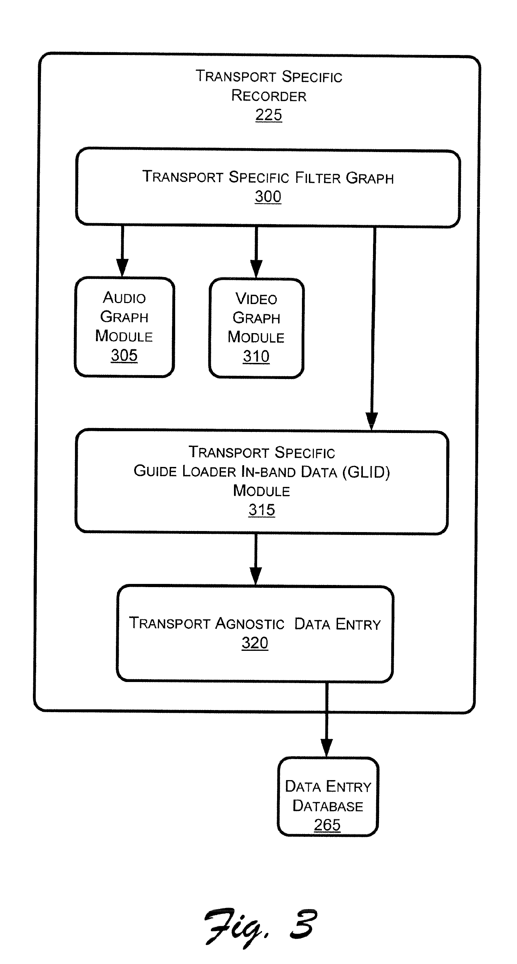

Fig. 3 shows exemplary transport specific recorder 225 in greater detail. In this example, audio/video data is received such as a television broadcast transmission signal and transmission standards particular to television transmissions; however, it is contemplated that in other instances a broadcast transmission signal may be audio, video, and/or information data.

In this implementation transport specific recorder 225 uses filter graphs, where specific filters perform particular processes on audio, video, and metadata. Processes may include data rendering and recording. The transport specific recorder 225 may make use of DirectShow® application program interface (API) and DirectX® software development kit (SDK) provided by the Microsoft Corporation.

Multiple transport specific recorders supporting different transmission standards may be stored in memory 255. As an example, the different transport specific recorders may support NTSC, ATSC, SECAM, DVB-T, DVB-S, and DVB-C.

A particular transport specific recorder 225 is loaded to support a particular transport in which a television transmission is received. In other implementations, an instance of the particular transport specific recorder 225 is created using a filter graph application as needed to support the particular transport of a television transmission.

Audio data is processed (i.e., decoded) by a transport specific audio graph module 305. The processed audio data may be sent to system bus 280 of Fig. 2 for playback through a speaker(s). Video data is processed (i.e., decoded) by a transport specific video graph module 310. The processed video data may be sent to system bus 280 of Fig. 2 and passed on to graphics processor 240 of Fig. 2 and eventually shown on a display such as display device 120 of Fig. 1.

Metadata separated by transport specific filter graph 300 is sent to a transport specific guide loader in-band (metadata) data (GLID) plug-in module 315 which processes the metadata based on a particular television transmission transport. GLID module 315 may be an algorithm for conversion of the transmission standard specific broadcast transmission signal into a generic or transport agnostic representation of the metadata. Information contained in the metadata is extracted as to information specific to particular fields defined by a predetermined format for EPG entries as discussed above. In particular, a transport agnostic data entry 320 is provided for each received television transmission. The data entry 320 is sent to and stored in data entry database 265 along with other data entries.

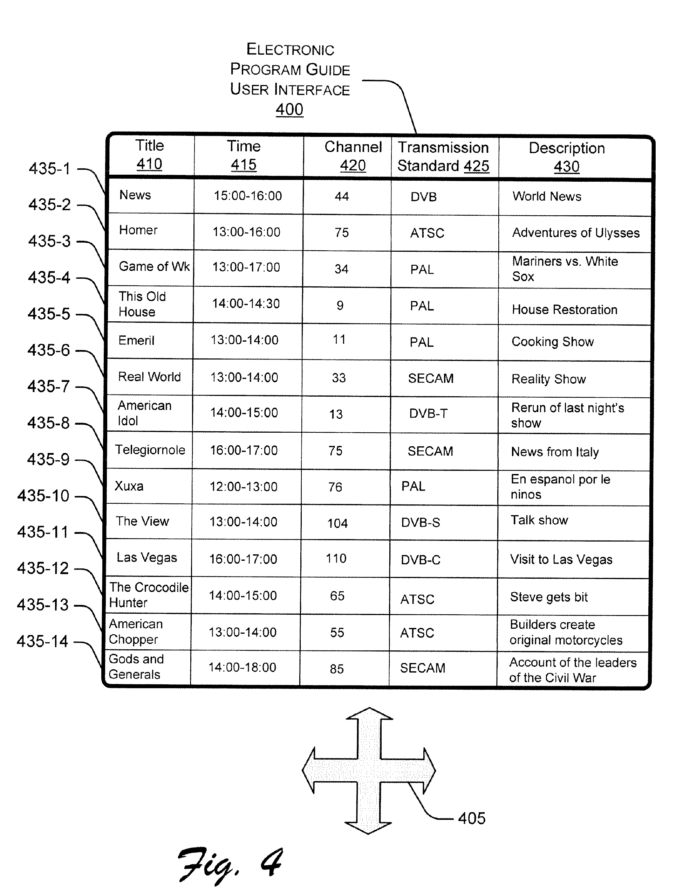

Fig. 4 shows an EPG user interface (UI) 400 that uses data entries (i.e., data entry 320) from multiple broadcast transmission signals. EPG UI 400 is one use of data entries included in databases 265, and is representative of an aggregation of metadata from multiple broadcast transmission signals using different transmission standards. EPG UI 400 may be displayed by itself or overlaid onto video and shown on a display such as display device 120. In typical implementations EPG UI 400 is interactive so that a user may manipulate EPG UI 400 to show particular data such as program titles, play times, channels, and so forth.

Now referring back to Fig. 2, a user control or controlling device may be provided through I/O 205 of Fig. 2 which instructs or communicates with EPG Manager Interface 275. As discussed above, EPG Manager Interface 275 instructs EPG manager 270 to perform an action on EPG database 265. Multi-standard receiving device 135 receives multiple incoming broadcast transmission signals based on different transmission standards, and processes metadata of the broadcast transmission signals in the same manner (i.e., creates transport agnostic entries). All metadata regardless of transmission standard are presented to a user as if originating from a "common source" (i.e., transmission specific broadcaster).

Once again referring to Fig. 4, in this example, the EPG UI 400 includes program information derived from the metadata of multiple television transmissions using different transmission standards. EPG UI 400 includes columns depicting program title 410, time 415, channel 420, transmission standard 425, and description 430. As discussed above, data entries (e.g., data entry 320) processed by transport specific recorder 225 and decoder 245 are formatted to have the same fields and field sizes as represented by columns in the EPG UI 400.

Information from EPG entries populate rows 435-1 to 435-14 which make up EPG UI 400. Each of rows 435 is derived from metadata (information) received through the same or different transmission standards; however, it is transparent to a user that different transmission standards are involved since only one EPG UI 400 is used for multiple television broadcast transmission signals using different transmission standards. A user sees an integrated EPG UI 400 with consistent row entries. A field such as field 425 may be used to particular describe to a user the originating transmission standard.

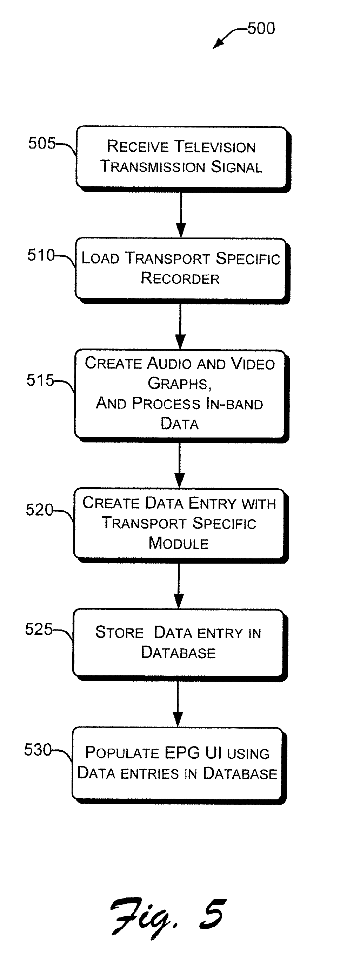

Fig. 5 shows a process 500 to create data entries from metadata from multiple broadcasters using multiple transmission standards. The process takes place whenever a receiving device (e.g., multi-transport receiving device 135) receives broadcast transmission signals.

The process 500 is illustrated as a collection of blocks in a logical flow graph, which represent a sequence of operations that can be implemented in hardware, software, or a combination thereof In the context of software, the blocks represent computer instructions that, when executed by one or more processors, perform the recited operations. The process 500 is described with reference to multi-standard receiving device 135 of Fig. 2, although the process may be implemented in other devices.

At block 505, multi-standard receiving device 135 receives a broadcast transmission signal that may in the form or one or more communication signals (e.g., signals, 110, 115, and 130 of Fig. 1) which may be an analog RF signal, a digital signal from a network, satellite signal, microwave signal and any other communication signal. The broadcast transmission signal is transmitted from broadcasters 105 using a particular television transmission standard. The broadcast transmission signal is received at physical receiver 200 or through an I/O 205, and to tuner(s) 210.

At block 510, controller 250 of multi-standard receiving device 135 calls up and installs, or initiates an instance of a particular transport specific recorder 225 capable of processing the digital bit stream based on a particular transmission standard.

At block 515, audio, video, and metadata are processed and separated by transport filter graph 300 of transport specific recorder 225. In other instances processes may only occur for audio, video, and/or data. In this example, an audio graph and video graph are created to process separated audio and video - and in certain cases, record audio and video content. Metadata is separated and further processed.

At block 520, metadata is sent from the filter graph 300 to GLID module 315. GLID module 315 processes the metadata based on a particular television transmission standard. GLID module 315 particularly converts the transmission standard specific data into entries that are transmission standard agnostic. Information contained in the metadata is extracted as to information specific to particular fields defined by the predetermined format for data entries. The information is placed in a data entry defined by the predetermined format.

At block 525, the formatted data entry is sent to and stored in database 265 stored in memory 255 of multi-standard receiving device 135. The database 265 includes multiple data entries provided by transport specific recorders 225.

At block 530, an EPG may be populated with data entries in the database 265. The EPG may be displayed as EPG UI 400 to a user through a display such as display device 145. The user may manipulate the EPG entries (i.e., scroll through columns and rows) through a user interface to multi-standard receiving device 135. Graphical interface icon 405 may be displayed along with EPG 400 to describe user control or interface with EPG UI 400.

### CONCLUSION

The above-described receiving device creates normalized representation of various metadata received in multiple broadcast transmission signals using different transmission standards. Although the invention has been described in language specific to structural features and/or methodological acts, it is to be understood that the invention defined in the appended claims is not necessarily limited to the specific features or acts described. Rather, the specific features and acts are disclosed as exemplary forms of implementing the chimed invention.

## Claims

1. A multi-standard receiving device comprising:
a tuner that receives a broadcast transmission signal based on a particular transmission standard; and
a transport specific recorder that processes metadata from the broadcast transmission signal, the transport specific recorder being configured to create from the metadata a data entry according to a predetermined format that supports multiple transmission standards.

2. The multi-standard receiving device of claim 1, wherein the transmission standard applies to one of the following: television, radio, and data service.

3. The multi-standard receiving device of claim 1, wherein the broadcast transmission signal is received from one of the following: a terrestrial broadcaster, a cable broadcaster, and a satellite broadcaster.

4. The multi-standard receiving device of claim 1, wherein the broadcast transmission signal is received as one of the following signals RF, satellite, and microwave.

5. The multi-standard receiving device of claim 1, wherein the transport specific recorder comprises a filter graph to process the metadata.

6. The multi-standard receiving device of claim 1 further comprising a database wherein the data entry is stored along with other data entries.

7. The multi-standard receiving device of claim 6 wherein the database is an electronic program guide (EPG) database.

8. The multi-standard receiving device of claim 7 wherein the EPG entries of the EPG database are used to populate an EPG user interface provided to a user.

9. The multi-standard receiving device of claim 8 further comprising an input to receive user instructions to manipulate information provided by the EPG user interface.

10. The multi-standard receiving device of claim 1 further comprising a controller which loads the transport specific recorder when the broadcast transmission signal based on the particular transmission is received.

11. A method of processing data entries comprising:
receiving a transmission standard specific broadcast transmission signal;
determining the transmission standard used by the broadcast transmission signal;
processing metadata contained in the broadcast transmission signal;
extracting the metadata based on the transmission standard; and
creating a data entry based on a predetermined format that is independent of any particular transmission standard.

12. The method of claim 11 wherein the transmission standard applies to one of the following: television, radio, and data services.

13. The method as recited in claim 11, wherein the transmission standard is one of the following ATSC, NTSC, PAL, SECAM, DVB, and ISDB.

14. The method as recited in claim 11, wherein the receiving is performed by a physical receiver configured to receive an RF, network, satellite, or microwave signal.

15. The method as recited in claim 11, wherein the processing is performed by transport specific recorder.

16. The method as recited in claim 11 further comprising loading a transport specific recorder based on a transmission standard that is determined.

17. The method as recited in claim 16 wherein the transport specific recorder comprises a transport specific plug-in module which performs the creating.

18. The method as recited in claim 11 further comprising storing the data entries in a database along with other data entries received in broadcast transmission signals using different transmission standards.

19. The method as recited in claim 18 wherein the database is an EPG database.

20. The method as recited in claim 19 further comprising displaying information conveyed in the EPG database to user.

21. One or more computer-readable media comprising computer-executable instructions that, when executed, perform the method as recited in claim 11.

22. For use with a receiving device, a storage medium having instructions that, when executed on the receiving device, performs acts comprising:
receiving one or more broadcast transmission signals, wherein each of the broadcast transmission signals is based on a particular transmission standard;
determining a transmission standard for a received broadcast transmission signal;
processing metadata from the received broadcast transmission signal based on the determined transmission standard;
converting the metadata form the received broadcast transmission signal to a generic data entry independent of any particular transmission standard.

23. A storage medium as recited in claim 22 further comprising loading a transport specific recorder for the determined transmission standard.

24. A storage medium as recited in claim 22 further comprising creating an instance of a transport specific recorder for the determined transmission standard.

25. A storage medium as recited in claim 22 further comprising storing the data entry along with other data entries from multiple broadcast transmission signals using different transmission standards.

26. A storage medium as recited in claim 25 further comprising populating rows of an electronic program guide (EPG) user interface with information from the data entries entries.

27. A storage medium as recited in claim 26 further comprising processing the information of EPG entries based on inputs provided by a user.

28. A population of a database, comprising:
receiving means for receiving multiple broadcast transmission signals based on different transmission standards;
separating means for separating metadata from a broadcast transmission signal;
processing means for processing information contained in the metadata; and
converting means for providing an data entry based the processed information into a transmission standard independent format.

29. The population as recited in claim 28 further comprising storing means for storing the data entry with other data entries.

30. The population as recited in claim 28 further comprising displaying means for displaying a representation of data entries to a user.

31. The population as recited in claim 30 further comprising controlling means for controlling information contained in the data entries.
